# EUROPEAN PATENT APPLICATION

(11) **EP 4 803 588 A1**
(43) Date of publication of application: **09.09.2026**
(21) Application number: 23955020.5
(22) Date of filing: 02.11.2023
(51) Int. Cl.: C09J 101/12, B32B 23/00, B32B 23/20, C09J 11/06

(54) **ADHESIVE COMPOSITION**

(71) Applicant: Daicel Corporation, Osaka-shi, Osaka 530-0011 (JP)
(72) Inventor: MUTSUDA, Mitsuteru, Tokyo 108-8230 (JP); YAMAKAWA, Akira, Tokyo 108-8230 (JP)
(74) Representative: Müller-Boré & Partner Patentanwälte PartG mbB
(86) International application number: PCT/JP2023/039675
(87) International publication number: WO 2025/094378

(57) **Abstract**

The adhesive composition contains a cellulose derivative and a solvent component. The cellulose derivative has a degree of substitution with an acetyl group of 1.9 or more and 2.6 or less. The solvent component contains an organic solvent A having a boiling point of 100°C or higher and an SP value of 18 to 30 (J^{1/2}/cm^{3/2}). The amount of the cellulose derivative is 15% by mass or more and 30% by mass or less based on the total amount of the cellulose derivative and the organic solvent A.

## Description

### Technical Field

The present disclosure relates to an adhesive composition. Specifically, the present disclosure relates to an adhesive composition and to an adhesive, a primer, and a molded article in which the adhesive composition is used.

### Background Art

Cellulose resin is a polymeric material derived from cellulose, and representative polymeric materials are cellulose derivatives. The primary feedstock for cellulose derivatives is cellulose, which is a natural material, and, therefore, cellulose resin can be used to obtain molding materials and molded articles that are sustainable and the environmental impact of which is small.

Among cellulose derivatives, for example, cellulose acetate, cellulose acetate butyrate, cellulose acetate propionate, and the like that contain an acetyl group are known to exhibit thermoplasticity depending on the degree of substitution thereof. To mold cellulose acetate and the like, the "extrusion method" for extruding the material so as to have a constant cross-sectional shape and the "block method" for molding the material by introducing it into a mold are conventionally used. Accordingly, further processing such as cutting may be needed to obtain molded articles having complex shapes. In recent years, attempts have been made to produce molded articles by melt molding, injection molding, and the like using cellulose acetate and such sustainable materials. However, cellulose derivatives, or cellulose acetate in particular, have lower melt-flowability than conventional synthetic polymers, and are thus problematic in that it is difficult to carry out injection molding to form complex shapes.

On the other hand, cellulose derivatives, or cellulose acetate in particular, are known to be highly biodegradable and decomposed by activated sludge. Moreover, cellulose acetate that has improved biodegradability and exhibits marine-degradability has also been proposed. In recent years, with increasing concern about the global environment, there has been the demand for achieving the production of molded articles having complex shapes by using biodegradable cellulose derivatives, or cellulose acetate in particular.

For example, in the case of metal materials, a technique for producing a molded article having the desired size and shape by joining a plurality of members is known. On the other hand, resin members generally have a high surface wetting tension. Accordingly, liquid adhesives do not readily spread, and measures need to be taken to bond resin members together. A known method that is representative and simple is to apply a surface treatment agent called a "primer" to the surfaces of resin members, and then apply an adhesive to join them.

For members made of cellulose acetate among cellulose derivatives, there is exceptionally a method involving a solvent that dissolves cellulose acetate to join the members. In this method, a solvent that dissolves cellulose acetate is applied to the joining surfaces of the members to be joined, thus causing the surfaces to swell and join. Examples of the solvent that dissolves cellulose acetate include ketones such as acetone. A commercially available adhesive containing such a solvent is trade name "NO. 250-B Cel Acetate Adhesive Z" manufactured by San Nishimura Co., Ltd. The components of this adhesive include a mixed solvent of 20 wt% ethyl acetate (boiling point 77°C), 30 wt% ethyl lactate (boiling point 155°C), and 50 wt% acetone (boiling point 55°C) by weight. This adhesive is capable of joining lightweight, small members such as nose pads of eyeglasses.

On the other hand, with the expansion of application fields, there is also a growing demand for application to molded articles that have larger sizes and more complex shapes. Moreover, depending on the application field, optical transparency may be required. Solvents such as acetone have low viscosity, and thus adhesives primarily composed of such solvents are problematic by dripping from the applied joining surfaces and thus being difficult to handle in large-area joining. Moreover, volatile solvents such as acetone evaporate quickly, thus joining needs to be carried out within 30 seconds after application, and, in this regard as well, it is difficult to apply such adhesives to members having large bonding areas.

In the above "NO. 250-B Cel Acetate Adhesive Z", ethyl lactate and ethyl acetate are added to acetone to regulate the viscosity and the evaporation rate, which, however, does not completely solve the problems resulting from joining members having large joining surfaces. In addition, since "NO. 250-B Cel Acetate Adhesive Z" dissolves and joins the joining surfaces of adherends, it takes time for the adhesive to solidify and have stable strength, and since the adhesive contains high-boiling point solvents such as ethyl lactate, the solubility of cellulose acetate is poor, and the evaporation rate is low. Accordingly, it is impractical to apply the adhesive to joining large members. To date, there is no practical adhesive capable of joining large members made of cellulose resin materials.

For example, Patent Literature 1 (Japanese Patent Laid-Open No. 11-172290) proposes a solvent composition for plastics, containing a plurality of organic solvents. This solvent composition contains at least one solvent from isopropyl bromide and normal propyl bromide as a primary component and as a first solvent component, and further contains acetone, ethyl lactate, or the like as a second solvent component. Patent Literature 2 (Japanese Patent No. 2505909) discloses an adhesive containing a compound having a mercapto group and a masking agent selected from the group consisting of vanillin, lemon oil, and ester-based solvents.

### Citation List

### Patent Literature

Patent Literature 1: Japanese Patent Laid-Open No. 11-172290
Patent Literature 2: Japanese Patent No. 2505909

### Summary of Invention

### Technical Problem

The solvent composition disclosed in Patent Literature 1 and the adhesive disclosed in Patent Literature 2 have poor adhesion to members made of cellulose resin. Also, it is difficult to, as described above, apply adhesives made of organic solvents such as acetone and ethyl lactate to joining large members. Moreover, it is difficult to uniformly apply low-viscosity adhesives to the joining surfaces. In particular, when joining transparent members, irregularities on the joining surfaces are visually perceived as light reflections, resulting in the problem of a poor appearance.

Recently, there is also a growing demand for a primer (also referred to as a sealer) that enhances interlayer adhesion in additive manufacturing with large-scale 3D printers, which are becoming increasingly popular. For example, in the case of FDM (Fused Deposition Modeling) 3D printers, a nozzle is moved along a path controlled by a computer while discharging a thermoplastic material melted into a semi-liquid or liquid state, to build parts in a layer-by-layer manner. Large members can be produced by increasing the movable range of the nozzle. However, when the nozzle travels long distance, the discharged thermoplastic material cools and solidifies, then a new layer of material is discharged onto the solidified layer, therefore the layers are not integrated, and the desired molded article is not obtained. In order to produce large members using a 3D printer, a primer is required that is applied to the cooled, solidified layer and that provides adhesion to the newly discharged layer. To date, there is no primer that enhances interlayer adhesion in the additive manufacturing of large members using cellulose resin in particular.

An object of the present disclosure is to provide an adhesive composition that has excellent adhesion to members made of cellulose resin or members made of cellulose acetate in particular, that is capable of producing a large, complex molded article, and that has excellent transparency after joining.

Another object of the present disclosure is to provide an adhesive suitable for joining a large member made of cellulose resin. Yet another object of the present disclosure is to provide a primer suitable for interlayer bonding in additive manufacturing using a 3D printer. A further object of the present disclosure is to provide a large molded article made of cellulose resin.

### Solution to Problem

The adhesive composition according to the present disclosure contains a cellulose derivative and a solvent component. The cellulose derivative has a degree of substitution with an acetyl group of 1.9 or more and 2.6 or less. The solvent component contains an organic solvent A having a boiling point of 100°C or higher and an SP value of 18 to 30 (J^{1/2}/cm^{3/2}). The amount of the cellulose derivative in the adhesive composition is 15% by mass or more and 30% by mass or less based on the total amount of the cellulose derivative and the organic solvent A.

### Advantageous Effects of Invention

The adhesive composition swells the cellulose resin on the surface of a member that is an adherend. An adhesive containing the adhesive composition can be applied to the joining of a member made of cellulose resin. Also, the volatility of the organic solvent A, which is a solvent component, is low, and therefore the adhesion thereof is maintained for a certain period of time even after application to the joining surface. Moreover, the adhesive composition contains a cellulose derivative and thus exhibits a higher viscosity than conventional adhesives composed solely of solvents. The adhesive composition can be uniformly applied to the joining surface without causing dripping. After the adhesive composition is applied, the operator can ensure sufficient working time. Also, during production with a 3D printer, applying a primer containing the adhesive composition to the discharged layer enables sufficient working time to be obtained until a new layer that is an adherend is discharged. The primer enables the production of a large member in a single step using a 3D printer. Moreover, with the adhesive composition, a poor appearance resulting from non-uniform application can be avoided. The adhesive composition is also applicable to the joining of transparent members.

### Description of Embodiments

Below, an example of preferable embodiments will now be specifically described. Each configuration in each embodiment and combinations thereof, and the like, are only examples, and additions, omissions, substitutions, and other changes to the configuration can be made as appropriate within the scope that does not depart from the gist of the present disclosure. The present disclosure is not limited by embodiments, but only by the scope of claims. In addition, each of the aspects disclosed in this specification can be combined with any other characteristics disclosed in this specification.

The numerical range of each requirement disclosed herein can be suitably combined with the numerical ranges of other requirements. For example, the limitation to the numerical range of the degree of acetyl substitution of the cellulose resin can be combined with the limitation to the numerical range of the molecular weight. Also, the numerical range of each requirement disclosed herein can be a range obtained by suitably combining the upper and lower limits thereof.

### (Definition of terms)

The "cellulose derivative" is defined as a term collectively referring to compounds in which various substituent groups are introduced into at least some of the hydroxyl groups of a cellulose molecule. Herein, the cellulose derivative used as a molding material is specifically referred to as "cellulose resin". The "molding material" means a material for a member that serves as the adherend to be bonded by the adhesive composition of the present disclosure or a material of the molded article. The cellulose resin may be solid or molten. While the cellulose derivative and the cellulose resin as constituent components of the adhesive composition will be separately referred to below, the types and structures thereof may be the same or different.

Herein, "X to Y" indicating a range means "X or more and Y or less". Unless otherwise specified, all test temperatures are room temperature (20°C ± 5°C). Herein, "wt%" means % by mass. % by mass means weight percent and does not mean mass concentration.

### (Cellulose resin)

The material of the adherend to be bonded by the adhesive composition of the present disclosure is cellulose resin. The adhesion of the adhesive composition of the present disclosure is manifested by at least swelling the bonding surface of the adherend. The type of cellulose resin is not particularly limited as long as this function is not inhibited, and preferable is cellulose resin similar to the cellulose derivative contained in the adhesive composition described below.

The adherend targeted by the adhesive composition of the present disclosure may be solid cellulose resin or molten cellulose resin. For example, when using a primer containing the adhesive composition of the present disclosure in additive manufacturing with a 3D printer, the primer may be applied to solidified cellulose resin, and then molten cellulose resin may be laminated thereon. Alternatively, the primer may be applied to molten cellulose resin, and then a molten cellulose derivative may be laminated thereon.

The cellulose resin is obtained by derivatizing at least some hydroxyl groups of a cellulose molecule. Cellulose resin obtained by esterifying some hydroxyl groups is preferable, and cellulose resin obtained by esterifying at least some hydroxyl groups with acetyl groups is more preferable.

In other words, a preferable cellulose resin is a cellulose ester. The cellulose ester is preferably a cellulose fatty acid ester. Specific examples of the cellulose fatty acid ester include cellulose acetate, cellulose propionate, cellulose butyrate, cellulose acetate propionate, cellulose acetate butyrate, and the like. From the viewpoint of excellent biodegradability, cellulose acetate is more preferable. From the viewpoint of excellent moldability by injection molding, cellulose acetate butyrate and cellulose acetate propionate are more preferable.

When the cellulose resin is a cellulose ester, the degree of esterification is preferably about 1 to 3. When the cellulose resin is cellulose acetate, the degree of acetyl substitution is preferably 1.1 or more and 2.8 or less, more preferably 1.8 or more and 2.8 or less, even more preferably 2.2 or more and 2.7 or less, and particularly preferably 2.4 or more and 2.6 or less. Regarding the degree of acetyl substitution, the lower the upper limit, the better the moldability, and the lower the lower limit, the better the biodegradability. The degree of acetyl substitution can be adjusted such that the desired biodegradability and moldability are obtained.

From the viewpoint that melt molding is easily performed, the weight-average molecular weight Mw of the cellulose resin is preferably 310,000 or less, more preferably 300,000 or less, and even more preferably 280,000 or less. An extremely high melt flowability is not required for molding with a 3D printer, and therefore the weight-average molecular weight (Mw) of the cellulose resin used as the printed polymer of a 3D printer may be 150,000 or more. In particular, from the viewpoint of improving the strength of a molded article, the weight-average molecular weight Mw of cellulose acetate is preferably 180,000 or more, more preferably 200,000 or more, and even more preferably 220,000 or more. In the chromatogram obtained by size exclusion chromatography (GPC analysis) of cellulose resin (such as cellulose acetate), peaks referred to as pre-hump I, pre-hump II, main hump (main peak), and post-hump are observed in order from the shortest elution time (the lowest molecular weight). In the present disclosure, the main hump (the main peak) is used to calculate the weight-average molecular weight Mw, and other peaks are not considered.

The adherend targeted by the adhesive composition of the present disclosure may be cellulose resin containing a plasticizer. Examples of the plasticizer include glycerin ester, citric acid ester, adipic acid ester, and the like. The amount of the plasticizer contained in the adherend may be 10 wt% or more and 30 wt% or less, and may be 15 wt% or more and 25 wt% or less.

### (Adhesive composition)

The adhesive composition of the present disclosure contains a solvent component and a cellulose derivative having a degree of acetyl substitution of 2.1 or more and 2.6 or less. The solvent component contains an organic solvent A having a boiling point of 100°C or higher and an SP value of 18 to 30 (J^{1/2}/cm^{3/2}). The amount of the cellulose derivative in the adhesive composition is 15% by mass or more and 30% by mass or less based on the total amount of the cellulose derivative and the organic solvent A. The adhesive composition swells cellulose resin that is an adherend. An adhesive containing the adhesive composition can be applied to the joining of a member made of cellulose resin. A primer containing the adhesive composition is suitably used in additive manufacturing with a 3D printer using cellulose resin as a printed polymer. In a preferable embodiment, the solvent component may further contain an organic solvent B having a boiling point of lower than 100°C.

### (Cellulose derivative)

The cellulose derivative contained in the adhesive composition of the present disclosure has a degree of substitution with an acetyl group of 2.1 or more and 2.6 or less. A cellulose derivative having a degree of acetyl substitution of 1.9 or more and 2.6 or less exhibits excellent solvent solubility. The degree of acetyl substitution of the cellulose derivative is preferably 2.0 or more, and more preferably 2.1 or more. From the viewpoint of excellent biodegradability, the degree of acetyl substitution of the cellulose derivative is preferably 2.56 or less, more preferably 2.50 or less, even more preferably 2.40 or less, even more preferably 2.30 or less, and particularly preferably 2.26 or less. The overall degree of acetyl substitution of cellulose acetate may be 1.9 to 2.56, may be 1.9 to 2.50, may be 1.9 to 2.40, may be 1.9 to 2.30, may be 1.9 to 2.26, may be 2.0 to 2.6, may be 2.0 to 2.56, may be 2.0 to 2.50, may be 2.0 to 2.40, may be 2.0 to 2.30, may be 2.0 to 2.26, may be 2.1 to 2.6, may be 2.1 to 2.56, may be 2.1 to 2.50, may be 2.1 to 2.40, may be 2.1 to 2.30, and may be 2.1 to 2.26.

When the cellulose derivative is cellulose acetate, a degree of acetyl substitution of 2.7 or more tends to result in poor solubility in the solvent component. A degree of acetyl substitution of less than 2.0 also tends to result in poor solubility in the solvent component.

From the viewpoint of the adhesive strength resulting from the adhesive composition, the weight-average molecular weight Mw of the cellulose derivative is preferably 70,000 or more, more preferably 80,000 or more, even more preferably 90,000 or more, and particularly preferably 100,000 or more. The upper limit of the weight-average molecular weight Mw of the cellulose derivative is not particularly limited, and, from the viewpoint of the viscosity of the adhesive composition, is preferably 300,000 or less and more preferably 290,000 or less, and may be 280,000 or less.

When adhesive compositions having the same cellulose derivative concentration are compared, the larger the weight-average molecular weight of the cellulose derivative, the higher the viscosity of the adhesive composition. When adhesive compositions in which the cellulose derivative has the same weight-average molecular weight are compared, the higher the cellulose derivative concentration, the higher the viscosity of the adhesive composition. An adhesive composition having a high cellulose derivative concentration and a high viscosity has a short open time (bondable time). On the other hand, an adhesive composition in which the concentration of a cellulose derivative having a high weight-average molecular weight is low has a high viscosity but a long open time. The weight-average molecular weight of the cellulose derivative can be selected according to the conditions and the purpose of using the adhesive composition.

The molecular weight distribution of the cellulose derivative is evaluated by the ratio (Mw/Mn) of the number-average molecular weight Mn to the weight-average molecular weight Mw. In the present disclosure, in order to maintain a uniform dissolution state of the adhesive composition, the molecular weight distribution Mw/Mn is preferably 3.5 or less, more preferably 3.2 or less, and even more preferably 3.0 or less. From the viewpoint of the production efficiency of the cellulose derivative, the molecular weight distribution Mw/Mn of the cellulose derivative is preferably more than 1.7, more preferably 1.8 or more, even more preferably 2.0 or more, and particularly preferably 2.1 or more.

The cellulose derivative is usually a semi-synthetic polymer obtained from cellulose as a feedstock. Accordingly, the molecular weight and molecular weight distribution of the cellulose derivative generally depend on the feedstock cellulose. The molecular weight and molecular weight distribution of the cellulose derivative may be adjusted by using different types of cellulose feedstocks in combination.

The molecular weight and molecular weight distribution of the cellulose derivative in the adhesive composition can be determined by known methods. Specifically, the molecular weight and molecular weight distribution of the cellulose derivative are determined by measuring the solid concentration of the cellulose derivative in the adhesive composition, then diluting the composition with acetone, and performing size exclusion chromatography (GPC) measurement using the following apparatus and conditions (GPC-light scattering method).
Apparatus: Shodex GPC "SYSTEM-21H"
Solvent: Acetone
Columns: Two GMHxl columns (Tosoh) and a guard column (Tosoh TSKgel guard column HXL-H)
Flow rate: 0.8 ml/min
Temperature: 29°C
Sample concentration (in terms of cellulose derivative): 0.25% (wt/vol)
Injection volume: 100 µl
Detection: MALLS (multi-angle laser light scattering detector) ("DAWN-EOS", manufactured by Wyatt)
Standard substance for MALLS calibration: PMMA (molecular weight 27600)

The cellulose derivative is produced by known cellulose derivative production methods. For example, a cellulose derivative containing an acetyl group can be produced by the so-called acetic acid method in which acetic anhydride is used as an acetylating agent, acetic acid as a diluent, and sulfuric acid as a catalyst. As a result of using a sulfuric acid catalyst during production, a trace amount of a sulfuric acid group (a sulfuric acid ester) may be introduced into the cellulose derivative. In the adhesive composition of the present disclosure, inclusion of a sulfuric acid group that is unavoidably introduced during the production of the cellulose derivative is permissible.

The cellulose derivative may also contain alkaline earth metals such as magnesium (Mg), calcium (Ca), and barium (Ba), and alkali metals such as sodium (Na) and potassium (K). The total content of these metals can be selected within the range of 20 ppm to 300 ppm.

The cellulose derivative may further contain an acyl group other than an acetyl group. Examples of acyl groups other than the acetyl group include aliphatic acyl groups such as a propionyl group, a butyryl group, an isobutyryl group, a valeryl group, a pivaloyl group, a hexanoyl group, an octanoyl group, a decanoyl group, a lauroyl group, and a stearoyl group; and aromatic acyl groups such as a benzoyl group and a naphthoyl group. From the solvent solubility and safety viewpoint, an aliphatic acyl group is preferable, an aliphatic acyl group having 15 or fewer carbon atoms is more preferable, and an aliphatic acyl group having 12 or fewer carbon atoms is even more preferable. When the cellulose derivative contains an acetyl group and an acyl group other than the acetyl group, the total degree of substitution thereof may be 2.15 or more, 2.25 or more, or 2.35 or more, and the upper limit is 3.0.

The degree of acetyl substitution and the total degree of substitution of the cellulose derivative are the sum of the degrees of acetyl substitution at 2-, 3- and 6-positions of the glucose ring of the cellulose derivative, and can be measured by the following method. For example, they can be measured by NMR in accordance with the method of Tezuka (Tezuka, Carbonydr. Res. 273, 83 (1995)).

As long as the effects of the present disclosure can be obtained, the adhesive composition can contain, in addition to the cellulose derivative having a degree of acetyl substitution of 1.9 or more and 2.6 or less, a further cellulose derivative having an acyl group other than an acetyl group. Examples of such cellulose acylate include cellulose acetate propionate, cellulose acetate butyrate, and the like.

From the viewpoint of improving transparency after bonding, the amount of the cellulose derivative is preferably more than 8.0% by mass, more preferably 8.2% by mass or more, and even more preferably 8.5% by mass or more, based on total 100% by mass of the adhesive composition. From the viewpoint of solvent solubility, the concentration of the cellulose derivative in the adhesive composition is preferably 25% by mass or less, and more preferably 24% by mass or less.

When the amount of cellulose derivative in the adhesive composition is small, the area infiltrated with the cellulose resin is large, thus increasing the irregularities at the bonding interface and possibly reducing transparency after bonding. A cellulose derivative concentration in the adhesive composition of 25% by mass or more results in an excessively high viscosity of the adhesive composition and tends to deteriorate workability.

### (Solvent component)

Below, the solvent component contained in the adhesive composition of the present disclosure will now be described. Herein, the "boiling point" refers to the standard boiling point (the boiling point at 1 atm) and is measured in accordance with JIS K 2254.

The "SP value" means the solubility parameter value. Herein, the SP value is defined as a solubility parameter δ (unit: J^{1/2}/cm^{3/2}) calculated based on the molecular structure of a solvent using the molar attraction constants ΔF and the molar volumes Δv of various atomic groups disclosed in "Okitsu Toshinao, Adhesion, Vol. 40, No. 8, pp. 342-350 (1996), Kobunshi Kankokai" using the following expression (Expression 1):$δ = \sum ΔF / \sum Δv$

The SP value of a mixed solvent is calculated using the following expression (Expression 2):$δmix = {ψ}_{1} {δ}_{1} + {ψ}_{2} {δ}_{2} + … + {ψ}_{n} {δ}_{n}$ wherein ψ represents the volume fraction or molar fraction, and ψ₁ + ψ₂ + ... + ψₙ = 1.

### (Organic solvent A)

The solvent component in the adhesive composition of the present disclosure contains an organic solvent A having a boiling point of 100°C or higher and an SP value of 18 to 30 (J^{1/2}/cm^{3/2}). This organic solvent A has low volatility and has affinity for cellulose derivatives. Containing the organic solvent A as a solvent component, the adhesive composition can maintain its adhesion for a certain period of time after being applied to a joining surface made of cellulose resin.

Examples of the organic solvent A having a boiling point of 100°C or higher and an SP value of 18 to 30 (J^{1/2}/cm^{3/2}) include lactic acid esters such as methyl lactate (boiling point 145°C, SP value 24.8 J^{1/2}/cm^{3/2}) and ethyl lactate (boiling point 155°C, SP value 26.3 J^{1/2}/cm^{3/2}); acetic acid esters such as butyl acetate (boiling point 127°C, SP value 19.73 J^{1/2}/cm^{3/2}); butyric acid esters such as methyl butyrate (boiling point 120°C, SP value 18.68 J^{1/2}/cm^{3/2}) and ethyl butyrate (boiling point 102°C, SP value 19.04 J^{1/2}/cm^{3/2}); glycols such as methyl glycol (boiling point 124°C, SP value 25.13 J^{1/2}/cm^{3/2}) and methyl glycol acetate (boiling point 145°C, SP value 19.30 J^{1/2}/cm^{3/2}); and the like. The organic solvent A is preferably one or more selected from the group consisting of methyl lactate, ethyl lactate, and propyl lactate.

From the viewpoint of excellent coatability and adhesion, and from the viewpoint of operational safety, the boiling point of the organic solvent A is preferably 105°C or higher, more preferably 110°C or higher, and even more preferably 115°C or higher. From the viewpoint of the availability of the organic solvent A, the boiling point of the organic solvent A is preferably 300°C or lower, more preferably 290°C or lower, and even more preferably 280°C or lower.

When an organic solvent A having an SP value of less than 18 J^{1/2}/cm^{3/2} is contained, the boiling point of the solvent component tends to be low, and an organic solvent A having an SP value exceeding 30 J^{1/2}/cm^{3/2} may result in poor affinity for the cellulose derivative. The SP value of the organic solvent A is preferably 19 J^{1/2}/cm^{3/2} or more, more preferably 22 J^{1/2}/cm^{3/2} or more, and even more preferably 24 J^{1/2}/cm^{3/2} or more, and is preferably 29 J^{1/2}/cm^{3/2} or less, more preferably 28 J^{1/2}/cm^{3/2} or less, and even more preferably 27 J^{1/2}/cm^{3/2} or less.

From the viewpoint of improving transparency after bonding, the concentration of the organic solvent A is preferably 35.0% by mass or more, more preferably 40.0% by mass or more, and even more preferably 45.0% by mass or more, based on total 100% by mass of the adhesive composition. From the viewpoint of improving adhesion, the concentration of the organic solvent A in the adhesive composition is preferably 85.0% by mass or less, and more preferably 80.0% by mass or less.

Although the reason why transparency after bonding is improved according to the concentration of the organic solvent A is not clear, it seems that the organic solvent A, while having the effect of swelling the cellulose resin, does not completely melt the crystals of the cellulose resin. That is, it is conjectured that transparency after bonding is improved because the organic solvent A acts primarily on the amorphous moiety of the cellulose resin, and thus the crystalline form is maintained.

Moreover, the adhesive composition of the present disclosure contains the cellulose derivative in an amount of 15% by weight or more based on the total amount of the cellulose derivative and the organic solvent A. The adhesive composition containing the cellulose derivative and the organic solvent A in the above ranges exhibits a higher viscosity than conventional adhesives composed solely of solvents. The higher the cellulose derivative content in the adhesive composition, the higher the viscosity of the adhesive composition. The smaller the weight-average molecular weight of the cellulose derivative, the lower the viscosity of the adhesive composition. When using the adhesive composition of the present disclosure as a primer for 3D printers, an embodiment in which the weight-average molecular weight of the cellulose derivative is low, and the content of the cellulose derivative is high, is preferable.

The adhesive composition of the present disclosure makes it possible to obtain an adhesive that can be uniformly applied without causing dripping and with which the operator can ensure sufficient working time even after application. With the adhesive, a poor appearance resulting from non-uniform application can be avoided. The adhesive can be applied to the joining of transparent members.

From the viewpoint of obtaining excellent adhesion and transparency, the amount of the cellulose derivative in the adhesive composition is at least 15% by weight, preferably 16% by weight or more, more preferably 17% by weight or more, and even more preferably 18% by weight or more, based on the total amount of the cellulose derivative and the organic solvent A. From the viewpoint of solvent solubility, the amount of the cellulose derivative in the adhesive composition is preferably 30% by weight or less, more preferably 29% by weight or less, and even more preferably 28% by weight or less, based on the total amount of the cellulose derivative and the organic solvent A.

The viscosity of the adhesive composition can be suitably adjusted according to the embodiment and the desired open time. By increasing the viscosity of the adhesive composition, dripping when applied to the joining surface is minimized, and such an adhesive composition is thus suitable for joining large members. The viscosity of the adhesive composition can be regulated by the concentration and the weight-average molecular weight of the cellulose derivative.

### (Organic solvent B)

The adhesive composition of the present disclosure may contain an organic solvent B having a boiling point of lower than 100°C as a solvent component. The organic solvent B having a boiling point of lower than 100°C has a high evaporation rate. The organic solvent B acts as a drying aid for the adhesive composition. The adhesive composition containing the organic solvent B as a solvent component, and an adhesive containing it, improve production efficiency. In other words, the organic solvent B is used to regulate the open time of the adhesive composition. The higher the content of the organic solvent B, the shorter the open time. When using the adhesive composition as a primer for 3D printers, a lower content of the organic solvent B is more preferable. The primer does not need to contain the organic solvent B.

A preferable organic solvent B may be any solvent that has affinity for the cellulose derivative. Examples of the organic solvent B having a boiling point of lower than 100°C and affinity for the cellulose derivative include acetone (boiling point 56°C), tetrahydrofuran (boiling point 66°C), methyl ethyl ketone (boiling point 79.6°C), methyl acetate (boiling point 57°C), ethyl acetate (boiling point 77°C), acetonitrile (boiling point 81.6°C), dioxolane (boiling point 74°C), methyl formate (boiling point 31.8°C), chloroform (boiling point 61.2°C), and the like.

From the viewpoint of operational safety, the organic solvent B is preferably one or more selected from the group consisting of acetone, tetrahydrofuran, methyl ethyl ketone, methyl acetate, ethyl acetate, acetonitrile, and dioxolane. More preferably, the organic solvent B contains one or more selected from acetone and tetrahydrofuran.

From the viewpoint of improving production efficiency, the concentration of the organic solvent B in the adhesive composition is preferably 5.0% by mass or more, more preferably 5.5% by mass or more, and even more preferably 6.0% by mass or more, based on total 100% by mass of the adhesive composition. From the viewpoint of improving adhesion, the concentration of the organic solvent B in the adhesive composition is preferably 60.0% by mass or less, and more preferably 55.0% by mass or less. Depending on the intended use of the adhesive composition, the concentration of the organic solvent B may be even lower, may be 40% by mass or less, may be 30% by mass or less, may be 20% by mass or less, or may be 10% by mass or less.

### (Optional components)

As long as the effects of the present disclosure are obtained, the adhesive composition may contain an organic solvent other than the organic solvent A and the organic solvent B. In addition, the adhesive composition may contain known additives such as plasticizers, stabilizers, viscosity modifiers, and colorants.

### (Adhesive)

The adhesive of the present disclosure contains the adhesive composition described above. The adhesive contains a solvent component that has strong affinity for cellulose resin. The adhesive can be applied to joining members made of cellulose resin together. By using the adhesive of the present disclosure to join a plurality of members having different shapes and sizes, large molded articles having complex shapes can be produced.

Members that are adherends for the adhesive of the present disclosure can be produced by mixing cellulose resin with known additives such as plasticizers as necessary and then subjecting the mixture to known molding techniques such as extrusion molding, blow molding, and injection molding. These members may each have a fitting part for fitting them together. The fitting part may be bonded to these members.

### (Joining method)

From another aspect, the present disclosure relates to a method for joining large members together using the adhesive composition described above. In other words, the joining method of the present disclosure includes the step of joining large members made of cellulose resin together using an adhesive composition containing a cellulose derivative and a solvent component.

### (Primer)

The primer of the present disclosure contains the adhesive composition described above. The primer contains a solvent component that has strong affinity for cellulose resin. The primer can be applied to additive manufacturing method using cellulose resin as a printed polymer.

Specifically, an additive manufacturing method using a 3D printer is a known molding technique for members made of cellulose resin. The additive manufacturing method can be applied to the production of a molded article that is made of cellulose resin and has a three-dimensional shape. For example, according to a fused deposition modeling method, cellulose resin is fed to a 3D printer, heated, and then extruded through a nozzle to thereby form a resin layer. The resin layer may be in a molten state, may be in a semi-molten state, or may be a laminate in which a semi-molten cellulose resin in a strand form is laminated. In a 3D printer, the resin layer is sequentially laminated to form a multilayer structure, and thereby a molded product having the desired shape is produced.

The primer of the present disclosure can be used to bond together the resin layers to be laminated. Specifically, the primer of the present disclosure is applied to form an adhesive layer to the surface of a resin layer formed by being extruded from a 3D printer, then cellulose resin is extruded onto the adhesive layer to laminate the resin layers, and thereby the resin layers can be joined via the adhesive layer. After being joined, the adhesive layer and the resin layers are integrated.

In conventional 3D printers, before a resin layer formed by extrusion from a nozzle cools and solidifies, a molten resin is extruded to form a resin layer. In this case, resin layers in a molten state or a semi-molten state are laminated and solidified together to provide a member in which layers are laminated and integrated. However, when forming a large member using a 3D printer, it is necessary to increase the circumference of a laminated resin. With a long circumference, the resin extruded from the nozzle completely cools and solidifies before the next resin is extruded, resulting in the problem of insufficient interlayer adhesion. This problem has been a limitation to the practical application of additive manufacturing technology to large members, or large members made of cellulose resin in particular, using 3D printers.

The present inventors have found that a molded article in which layers are laminated and integrated can be obtained by interposing an adhesive layer made of the above-described adhesive composition between the resin layers to be laminated. For example, an apparatus for discharging the primer of the present disclosure is provided in the vicinity of a nozzle that extrudes a molten resin in a 3D printer, the primer is applied to a resin layer that has cooled and solidified, then a molten resin is extruded onto the primer, and thereby the next resin layer can be formed. Accordingly, the interlayer adhesion between the cooled, solidified resin layer and the next resin layer is strengthened, and excellent lamination and integration are achieved. Moreover, by applying the primer of the present disclosure to a member formed by injection molding or the like, cellulose resin can be extruded onto this member using a 3D printer to perform additive manufacturing so as to have the desired shape.

### (Method for producing additive-manufactured article)

From another aspect, the present disclosure relates to a method for producing a large member made of cellulose resin using a 3D printer. Specifically, the present disclosure is a production method in which cellulose resin is subjected to additive manufacturing using a 3D printer, the method comprising the step of applying a primer containing the above-described adhesive composition between resin layers made of cellulose resin to form an adhesive layer.

### (Molded article)

In one embodiment, in the molded article of the present disclosure, a plurality of members formed of cellulose resin are bonded together via an adhesive layer formed of the above-described adhesive composition. The adhesive composition of the present disclosure allows for uniform application to the bonding surfaces, and adhesion is maintained for a certain period of time after application. The molded article in which resin layers are jointed via the adhesive layer formed of the adhesive composition has high transparency.

In another embodiment, in the molded article of the present disclosure, an adhesive layer formed of the above-described adhesive composition and a resin layer formed of cellulose resin are alternately laminated. The molded article is obtained by the above-described additive manufacturing technology with a 3D printer. The adhesive composition of the present disclosure allows for uniform application to the bonding surfaces, and adhesion is maintained for a certain period of time after application. After being applied to a resin layer, the adhesive composition and the adhesive containing it have excellent adhesion until the next resin layer is laminated. The molded article in which resin layers are jointed via the adhesive layer formed of the adhesive composition has high transparency.

### Examples

Below, the effects of the present disclosure will now be clarified by way of examples, but the present disclosure should not be interpreted as being limited by the description of the examples.

### (Production of adhesive composition)

According to the formulations shown in Tables 1 to 4 below, a cellulose derivative, organic solvent A, and organic solvent B were introduced into a container (volume 500 ml) and stirred at a temperature of 25°C to give the adhesive compositions of Examples and Comparative Examples. The resulting adhesive compositions were all liquid, and it was visually confirmed that the cellulose derivative was dissolved.

### (Fixation after joining)

A plurality of plate-shaped test pieces (thickness 2 mm) made of cellulose acetate were provided. After the adhesive composition was applied to the entire bonding surface of a first test piece (bonding area 2 cm²), a second test piece was immediately attached to the first test piece. The condition of the test pieces was observed 10 seconds and 30 seconds after attachment. The observation results are shown in Tables 1 to 4 below. In the tables, "fixed" means that the attached test pieces were securely bonded to each other and could not be moved by hand, and "movable" means that the two test pieces were not completely secured to each other.

### (Adhesion after standing)

A plurality of plate-shaped test pieces (thickness 2 mm) made of cellulose acetate were provided. After the adhesive composition was applied to the entire bonding surface of a first test piece (bonding area 2 cm²), the test piece was left to stand at room temperature. One minute, five minutes, and ten minutes after applying the adhesive composition, a second test piece was attached to the first test piece, and adhesion was evaluated. The observation results are shown in Tables 1 to 4 below. In the tables, "favorably adhered" means that the two test pieces were joined together and could not be separated, and "not adhered" means that it was not possible to adhere the two test pieces to each other at all.

### (Transparency after standing)

A plurality of plate-shaped test pieces (thickness 2 mm) made of cellulose acetate were provided. After the adhesive composition was applied to the entire bonding surface of a first test piece (bonding area 2 cm²), the test piece was left to stand at room temperature. One minute, five minutes, and ten minutes after applying the adhesive composition, a second test piece was attached to the first test piece, and the transparency of the joined test pieces was visually evaluated. The observation results are shown in Tables 1 to 4 below. In the tables, "A" means that the joined test pieces were entirely transparent; "B" means that wrinkle-like irregularities were visible at the joining interface; and "C" means that wrinkle-like irregularities were large, and transparency was poor. In Comparative Example 1, it was not possible to join two test pieces together, and therefore no transparency evaluation was carried out.

### [Table 1]

**(Table 1)**

| | | Comparative Example 1 | | Comparative Example 2 | | Comparative Example 3 | | Example 1 | | Comparative Example 4 | |
|---|---|---|---|---|---|---|---|---|---|---|---|
| | | (part by weight) | (% by weight) | (part by weight) | (% by weight) | (part by weight) | (% by weight) | (part by weight) | (% by weight) | (part by weight) | (% by weight) |
| Organic solvent A | Ethyl lactate | 0 | 0 | 100 | 100 | 90 | 81.8 | 85 | 47.2 | 90 | 50.0 |
| | Methyl lactate | 0 | 0 | 0 | 0 | 0 | 0.0 | 0 | 0.0 | 0 | 0.0 |
| Cellulose derivative | CA | 0 | 0 | 0 | 0 | 10 | 9.1 | 15 | 8.3 | 10 | 5.6 |
| Organic solvent B | Acetone | 100 | 100 | 0 | 0 | 10 | 9.1 | 80 | 44.4 | 80 | 44.4 |
| | THF | 0 | 0 | 0 | 0 | 0 | 0.0 | 0 | 0.0 | 0 | 0.0 |
| Fixation after joining | After 10 seconds | Solidified | | Movable | | Movable | | Solidified | | Solidified | |
| | After 30 seconds | Solidified | | Movable | | Solidified | | Solidified | | Solidified | |
| Adhesion after standing | After 1 minute | Not adhered | | Favorably adhered | | Favorably adhered | | Favorably adhered | | Favorably adhered | |
| | After 5 minutes | Not adhered | | Favorably adhered | | Favorably adhered | | Favorably adhered | | Favorably adhered | |
| | After 10 minutes | Not adhered | | Favorably adhered | | Favorably adhered | | Favorably adhered | | Favorably adhered | |
| Transparency after standing | After 1 minute | - | | A | | A | | A | | A | |
| | After 5 minutes | - | | A | | B | | A | | B | |
| | After 10 minutes | - | | A | | C | | A | | C | |

### [Table 2]

**(Table 2)**

| | | Example 2 | | Example 3 | | Comparative Example 5 | | Example 4 | | Example 5 | |
|---|---|---|---|---|---|---|---|---|---|---|---|
| | | (part by weight) | (% by weight) | (part by weight) | (% by weight) | (part by weight) | (% by weight) | (part by weight) | (% by weight) | (part by weight) | (% by weight) |
| Organic solvent A | Ethyl lactate | 80 | 53.3 | 80 | 72.7 | 90 | 81.8 | 80 | 26.7 | 0 | 0.0 |
| | Methyl lactate | 0 | 0.0 | 0 | 0.0 | 0 | 0.0 | 0 | 0.0 | 85 | 28.3 |
| Cellulose derivative | CA | 20 | 13.3 | 20 | 18.2 | 10 | 9.1 | 20 | 6.7 | 15 | 5.0 |
| Organic solvent B | Acetone | 50 | 33.3 | 0 | 0.0 | 0 | 0.0 | 0 | 0.0 | 200 | 66.7 |
| | THF | 0 | 0.0 | 10 | 9.1 | 10 | 9.1 | 200 | 66.7 | 0 | 0.0 |
| Fixation after joining | After 10 seconds | Solidified | | Solidified | | Solidified | | Solidified | | Solidified | |
| | After 30 seconds | Solidified | | Solidified | | Solidified | | Solidified | | Solidified | |
| Adhesion after standing | After 1 minute | Favorably adhered | | Favorably adhered | | Favorably adhered | | Favorably adhered | | Favorably adhered | |
| | After 5 minutes | Favorably adhered | | Favorably adhered | | Favorably adhered | | Favorably adhered | | Favorably adhered | |
| | After 10 minutes | Favorably adhered | | Favorably adhered | | Favorably adhered | | Favorably adhered | | Favorably adhered | |
| Transparency after standing | After 1 minute | A | | A | | A | | A | | A | |
| | After 5 minutes | A | | A | | B | | A | | A | |
| | After 10 minutes | A | | A | | C | | B | | B | |

### [Table 3]

**(Table 3)**

| | | Example 6 | | Example 7 | | Example 8 | | Example 9 | | Exam | ple 10 |
|---|---|---|---|---|---|---|---|---|---|---|---|
| | | (part by weight) | (% by weight) | (part by weight) | (% by weight) | (part by weight) | (% by weight) | (part by weight) | (% by weight) | (part by weight) | (% by weight) |
| Organic solvent A | Ethyl lactate | 0 | 0.0 | 0 | 0.0 | 85 | 77.3 | 80 | 72.7 | 80 | 76.2 |
| | Methyl lactate | 80 | 32.0 | 85 | 73.9 | 0 | 0.0 | 0 | 0.0 | 0 | 0.0 |
| Cellulose derivative | CA | 20 | 8.0 | 15 | 13.0 | 15 | 13.6 | 20 | 18.2 | 20 | 19.0 |
| Organic solvent B | Acetone | 0 | 0.0 | 15 | 13.0 | 10 | 9.1 | 10 | 9.1 | 5 | 4.8 |
| | THF | 150 | 60.0 | 0 | 0.0 | 0 | 0.0 | 0 | 0.0 | 0 | 0.0 |
| Fixation after joining | After 10 seconds | Solidified | | Solidified | | Solidified | | Solidified | | Movable | |
| | After 30 seconds | Solidified | | Solidified | | Solidified | | Solidified | | Solidified | |
| Adhesion after standing | After 1 minute | Favorably adhered | | Favorably adhered | | Favorably adhered | | Favorably adhered | | Favorably adhered | |
| | After 5 minutes | Favorably adhered | | Favorably adhered | | Favorably adhered | | Favorably adhered | | Favorably adhered | |
| | After 10 minutes | Favorably adhered | | Favorably adhered | | Favorably adhered | | Favorably adhered | | Favorably adhered | |
| Transparency after standing | After 1 minute | A | | A | | A | | A | | A | |
| | After 5 minutes | A | | A | | A | | A | | A | |
| | After 10 minutes | B | | A | | A | | A | | A | |

### [Table 4]

**(Table 4)**

| | | Example 11 | | Comparative Example 6 | |
|---|---|---|---|---|---|
| | | (part by weight) | (% by weight) | (part by weight) | (% by weight) |
| Organic solvent A | Ethyl lactate | 80 | 80.0 | 90 | 90.0 |
| | Methyl lactate | 0 | 0.0 | 0 | 0.0 |
| Cellulose derivative | CA | 20 | 20.0 | 10 | 10.0 |
| Organic solvent B | Acetone | 0 | 0.0 | 0 | 0.0 |
| | THF | 0 | 0.0 | 0 | 0.0 |
| Fixation after joining | After 10 seconds | Movable | | Movable | |
| | After 30 seconds | Solidified | | Solidified | |
| Adhesion after standing | After 1 minute | Favorably adhered | | Favorably adhered | |
| | After 5 minutes | Favorably adhered | | Favorably adhered | |
| | After 10 minutes | Favorably adhered | | Favorably adhered | |
| Transparency after standing | After 1 minute | A | | A | |
| | After 5 minutes | A | | B | |
| | After 10 minutes | A | | C | |

| | | | | | |
|---|---|---|---|---|---|
| Ethyl lactate: manufactured by Tokyo Chemical Industry Co., Ltd., boiling point 155°C, SP value 26.3 (J^{1/2}/cm^{3/2}) Methyl lactate: manufactured by Tokyo Chemical Industry Co., Ltd., boiling point 145°C, SP value 24.8 (J^{1/2}/cm^{3/2}) CA: Cellulose acetate manufactured by Daicel Corporation, trade name "L50", degree of acetyl substitution 2.5, weight-average molecular weight Mw 200,000, molecular weight distribution Mw/Mn 5.0, viscosity-average degree of polymerization 180 Acetone: manufactured by Tokyo Chemical Industry Co., Ltd., boiling point 57°C, SP value 19.3 (J^{1/2}/cm^{3/2}) THF: Tetrahydrofuran manufactured by Tokyo Chemical Industry Co., Ltd., boiling point 66°C, SP value 17.5 (J^{1/2}/cm^{3/2}) | | | | | |

As shown in Table 1, in Comparative Example 1 in which neither the organic solvent A nor the cellulose derivative were used, when the test pieces were joined immediately after the adhesive composition was applied, the adhesive composition solidified (adhered) in 10 seconds, and did not show adhesion at all after a lapse of one minute after application. In contrast, in Comparative Example 2 in which only the organic solvent A was used, it was not possible to secure (adhere) the members even after a lapse of 30 seconds after joining.

As shown in Tables 1 to 4, in Comparative Examples 3 to 6 in which the amount of the cellulose derivative was less than 15% by mass based on the total amount of the cellulose derivative and the organic solvent A, irregularities created at the joining interface were large, and transparency was poor. In contrast, in Examples 1 to 10 in which the amount of the cellulose derivative was 15% by mass or more based on the total amount of the cellulose derivative and the organic solvent A, the adhesive composition was capable of bonding even after a lapse of 5 minutes after application, and the appearance was also excellent (transparent). Moreover, in Examples 1 to 3 and 7 to 10 in which the cellulose derivative concentration in the adhesive composition exceeded 8.0% by mass, no wrinkle-like irregularities were formed even after a lapse of 10 minutes after application, and an excellent (transparent) appearance was obtained.

### [Comparative Example 7]

First, 100 parts by mass of cellulose acetate (trade name "L50" manufactured by Daicel Corporation, degree of substitution 2.5, weight-average molecular weight Mw 200,000, molecular weight distribution Mw/Mn 5.0, viscosity-average degree of polymerization 180) as cellulose resin and 20 parts by mass of triacetin (trade name "DRA-150" manufactured by Daicel Corporation) as a plasticizer were introduced into a Henschel mixer, and mixed by being stirred such that the temperature was 70°C or higher due to frictional heat in the mixer, and thereby a mixture was obtained. The mixture was fed to a biaxial extruder (cylinder temperature: 200°C, die temperature: 220°C) and extruded to give pellets (cellulose resin 1).

The resulting pellets (cellulose resin 1) were fed to an injection molding machine and injection-molded under the conditions of a cylinder temperature of 200°C, a mold temperature of 50°C, and a molding cycle of 30 seconds (injection time 15 seconds, cooling time 15 seconds) to give an L-shaped cellulose resin member having a thickness of 10 mm, a length of 200 mm (chucking part 50 mm, bonding part 150 mm), and a width of 25 mm.

Next, the above pellets (cellulose resin 1) were fed to a 3D printer (trade name "Chashitsu GEM", manufactured by S.Lab, maximum modelling size: width 3 m x depth 3 m x height 3 m, nozzle diameter: 12mm, table heater temperature: set to normal temperature) and extruded onto the back surface of the L-shaped cellulose resin member to form a cellulose resin layer (chucking part 50 mm, bonding part 150 mm), and thereby a test piece of Comparative Example 7 having the shape described in JIS K 6854-3 ("Adhesives - Determination of peel strength of bonded assemblies, Part 3: T-peel test") was obtained.

Using the resulting test pieces, a peel test (180° peel method) was carried out in accordance with JIS K 6854-3 ("Adhesives - Determination of peel strength of bonded assemblies, Part 3: T-peel test") to measure the peel strength between the cellulose resin member and the cellulose resin layer. A universal tensile tester was used in the measurement. Specifically, the chucking part of the cellulose resin member was secured by the lower chuck of the universal tensile tester, the chucking part of the cellulose resin layer was secured by the upper chuck, and the peel strength across a width of 25 mm was measured at a test speed of 100 mm/min. The resulting peel strength was 70 g/25 mm, which was a strength that allowed for easy peeling. The peeled surface was the interface between the cellulose resin member and the cellulose resin layer.

### [Example 12]

A test piece of Example 12 was obtained in the same manner as in Comparative Example 7 except that the adhesive composition of Example 11 was applied to the back surface of the cellulose resin member before forming the cellulose resin layer with a 3D printer. In other words, in the test piece of Example 12, an adhesive layer made of the adhesive composition of Example 11 was formed between the cellulose resin member and the cellulose resin layer. Using this test piece of Example 11, the peel strength was measured under the same test conditions as in Comparative Example 7, and no peeling occurred even when the load cell of the universal tensile tester was at its maximum load capacity of 20 kg.

### [Example 13]

Pellets (cellulose resin 1) were obtained in the same manner as in Comparative Example 7. The pellets (cellulose resin 1) were fed to a 3D printer (trade name "Chashitsu GEM", manufactured by S.Lab, maximum modelling size: width 3 m x depth 3 m x height 3 m, nozzle diameter: 12mm, table heater temperature: set to normal temperature) to create a hut. The created hut had a length of 2 m, a width of 2 m, and a height of 2.6 m, and had a roof-less, barrel-like shape, with a wall corner R of 100 mm (the same applies to the floor-to-wall portions), a floor thickness of about 12 mm, and a wall thickness of about 24 mm. During the operation of the 3D printer, the adhesive composition of Example 11 was applied with a brush (brush width of about 20 mm) to a place 200 to 500 mm away from the nozzle tip in the direction of nozzle travel, and then the cellulose resin 1 was extruded from the nozzle onto the coated surface to form a cellulose resin layer. The adhesive composition was not applied to a 500 mm portion in the center of the floor. The application speed of the adhesive composition was synchronized with the speed of nozzle movement of 200 mm/sec. The application width of the adhesive composition was 20 mm, and the approximate equivalent calculated from the application length and the amount of the adhesive composition used was 150 mg/m².

The resulting hut although it was a large structure was confirmed as being successfully constructed, having an excellent interlayer strength, and undergoing no peeling or the like. The resulting hut was translucent. In Example 13, excellent interlayer adhesion was retained even without heating by a table heater, and light transmittance was also ensured. Moreover, as described above, excellent interlayer adhesive strength was obtained even without using a heat retention chamber included in a small 3D printer.

As shown by the above test results, the adhesive compositions of the Examples are excellent in various properties. From these evaluation results, the superiority of the present disclosure is evident.

### [Disclosed items]

The following items each disclose preferable embodiments.

### [Item 1]

An adhesive composition comprising a cellulose derivative and a solvent component, wherein
the cellulose derivative has a degree of substitution with an acetyl group of 1.9 or more and 2.6 or less,
the solvent component comprises an organic solvent A having a boiling point of 100°C or higher and an SP value of 18 to 30 (J^{1/2}/cm^{3/2}), and
an amount of the cellulose derivative is 15% by mass or more and 30% by mass or less based on a total amount of the cellulose derivative and the organic solvent A.

### [Item 2]

The adhesive composition according to item 1, wherein the cellulose derivative further comprises an acyl group other than the acetyl group.

### [Item 3]

The adhesive composition according to item 1 or 2, wherein the organic solvent A is one or more selected from the group consisting of methyl lactate, ethyl lactate, and propyl lactate.

### [Item 4]

The adhesive composition according to any one of items 1 to 3, wherein the solvent component further comprises an organic solvent B having a boiling point of lower than 100°C.

### [Item 5]

The adhesive composition according to item 4, wherein the organic solvent B is one or more selected from the group consisting of acetone, tetrahydrofuran, methyl ethyl ketone, methyl acetate, ethyl acetate, acetonitrile, and dioxolane.

### [Item 6]

The adhesive composition according to item 4 or 5, wherein a concentration of the organic solvent B is 5.0% by mass or more and less than 60.0% by mass.

### [Item 7]

The adhesive composition according to any one of items 1 to 6, wherein the cellulose derivative has a weight-average molecular weight of 70,000 or more and 300,000 or less.

### [Item 8]

An adhesive for cellulose resin, comprising the adhesive composition according to any one of items 1 to 7.

### [Item 9]

A primer comprising the adhesive composition according to any one of items 1 to 7.

### [Item 10]

A molded article, wherein a plurality of members formed of cellulose resin are bonded together via an adhesive layer formed of the adhesive composition according to any one of items 1 to 7.

### [Item 11]

A molded article, wherein an adhesive layer formed of the adhesive composition according to any one of items 1 to 7 and a resin layer formed of cellulose resin are alternately laminated.

### Industrial Applicability

The adhesive composition according to the present disclosure can be applied to the joining and production of various molded articles made of cellulose derivatives.

## Claims

1. An adhesive composition comprising a cellulose derivative and a solvent component, wherein
the cellulose derivative has a degree of substitution with an acetyl group of 1.9 or more and 2.6 or less,
the solvent component comprises an organic solvent A having a boiling point of 100°C or higher and an SP value of 18 to 30 J^{1/2}/cm^{3/2}, and
an amount of the cellulose derivative is 15% by mass or more and 30% by mass or less based on a total amount of the cellulose derivative and the organic solvent A.

2. The adhesive composition according to claim 1, wherein the cellulose derivative further comprises an acyl group other than the acetyl group.

3. The adhesive composition according to claim 1, wherein the organic solvent A is one or more selected from the group consisting of methyl lactate, ethyl lactate, and propyl lactate.

4. The adhesive composition according to claim 1, wherein the solvent component further comprises an organic solvent B having a boiling point of lower than 100°C.

5. The adhesive composition according to claim 4, wherein the organic solvent B is one or more selected from the group consisting of acetone, tetrahydrofuran, methyl ethyl ketone, methyl acetate, ethyl acetate, acetonitrile, and dioxolane.

6. The adhesive composition according to claim 4, wherein a concentration of the organic solvent B is 5.0% by mass or more and less than 60.0% by mass.

7. The adhesive composition according to claim 1, wherein the cellulose derivative has a weight-average molecular weight of 70,000 or more and 300,000 or less.

8. An adhesive for cellulose resin, comprising the adhesive composition according to claim 1.

9. A primer comprising the adhesive composition according to claim 1.

10. A molded article, wherein a plurality of members formed of cellulose resin are bonded together via an adhesive layer formed of the adhesive composition according to claim 1.

11. A molded article, wherein an adhesive layer formed of the adhesive composition according to claim 1 and a resin layer formed of cellulose resin are alternately laminated.
